# EUROPEAN PATENT SPECIFICATION

(11) **EP 4 029 710 B1**
(45) Date of publication and mention of the grant of the patent: **13.08.2025**
(21) Application number: 22151461.5
(22) Date of filing: 13.01.2022
(51) Int. Cl.: B60K 6/442, B60K 6/405, B60K 6/40, B60K 6/36, B60K 6/547, B60K 6/52, B60K 17/04, B60K 17/28

(54) **HYBRID FRONT DRIVING AXLE AND AGRICULTURAL VEHICLE**
HYBRIDANTRIEBSVORDERACHSE UND LANDWIRTSCHAFTLICHES FAHRZEUG
ESSIEU MOTEUR AVANT HYBRIDE ET VÉHICULE AGRICOLE

(30) Priority: 14.01.2021 IT 202100000614
(43) Date of publication of application: 20.07.2022
(73) Proprietor: CNH Industrial Italia S.p.A., 10156 Torino (IT)
(72) Inventor: Borghi, Alberto, 42033 Carpineti (IT); Pellizzari, Piero, 73024 Maglie (IT); Sedoni, Enrico, 41126 Modena (IT); Jensen, Michael, Lockport 60441 (US); Forte, Michelantonio, 41100 Modena (IT)
(74) Representative: CNH Industrial IP Department

(56) References cited:
- EP-A1- 3 702 191
- EP-A2- 0 952 027
- WO-A1-2020/168373
- AT-A4- 509 591

## Description

### TECHNICAL FIELD

The present invention concerns a driving axle arrangement for an agricultural vehicle, in particular a hybrid driving axle for a tractor.

### BACKGROUND OF THE INVENTION

Reduction of automotive fuel consumption and emissions is an ongoing process that involves more and vehicles, including agricultural and work vehicles, powered either entirely or in hybrid fashion by electric machines.

In general, hybrid/electrified vehicles differ from conventional internal combustion powered motor vehicles in that they are powered, at least in part, by one or more electric machines.

Such electric machines occupy a significant space and may be arranged, if present, far from the internal combustion engine.

However, the re-arrangement of the elements of the axle in the transmission vehicle would mean to update globally the design of the vehicle thereby incurring in high costs.

Moreover, each agricultural vehicle configuration has different typology of gearbox and therefore each gearbox configuration would need a specific reconfiguration of the hybrid vehicle.

Therefore, the need is felt to provide a hybrid axle design whereby one or more electric motors are coupled to a drive axle of a vehicle that are reduces product complexity and cost-effective in order to optimize the space of installation.

WO-A1-2020168373 discloses a drive train comprising a hybrid transmission, in particular a dedicated hybrid transmission, having: a transmission input shaft which is or can be rotationally connected to an internal combustion engine; a transmission output shaft; and at least one transmission gear stage between the transmission input shaft and the transmission output shaft, said transmission gear stage being formed by a shiftable spur gear stage having a fixed gear and an idler gear. In order to increase driving comfort, according to the invention: the first electric machine is or can be rotationally connected to at least one fixed gear of the transmission output shaft via a first power path; and a second electric machine can be rotationally connected to at least one fixed gear of the input shaft via a second power path, or alternatively to a fixed gear of the transmission output shaft via a third power path.

AT 509 591 A4 discloses a multi purpose vehicle comprising an all wheel drive hybrid powertrain and a front power take off.

An aim of the present invention is to satisfy the above mentioned needs in an optimized and cost-effective way.

### SUMMARY OF THE INVENTION

The aforementioned aim is reached by a front hybrid driving axle as claimed in independent claim 1 and a vehicle as claimed in claim 12.

Preferred embodiments of the invention are realized according to the dependent claims.

### BRIEF DESCRIPTION OF DRAWINGS

For a better understanding of the present invention, a preferred embodiment is described in the following, by way of a non-limiting example, with reference to the attached drawings wherein:
- Figure 1 is schematic lateral view showing an agricultural vehicle provided with a hybrid driving axle according to the invention;
- Figure 2 is a schematic representation of the transmission architecture of the hybrid electric axle according to the invention;
- Figure 3 is a front perspective view of the hybrid axle according to the invention with parts removed for sake of clarity;
- Figure 4 is a rear perspective view of the hybrid axle according to the invention with parts removed for sake of clarity;
- Figure 5 is a bottom view of the hybrid axle according to the invention;
- Figure 6 is a lateral side view of the hybrid axle according to the invention with parts removed for sake of clarity;
- Figure 7 is a sectional view of the hybrid axle with respect to line VII-VII of figure 6;
- Figure 8 is a perspective view of the transmission architecture schematized in figure 2; and

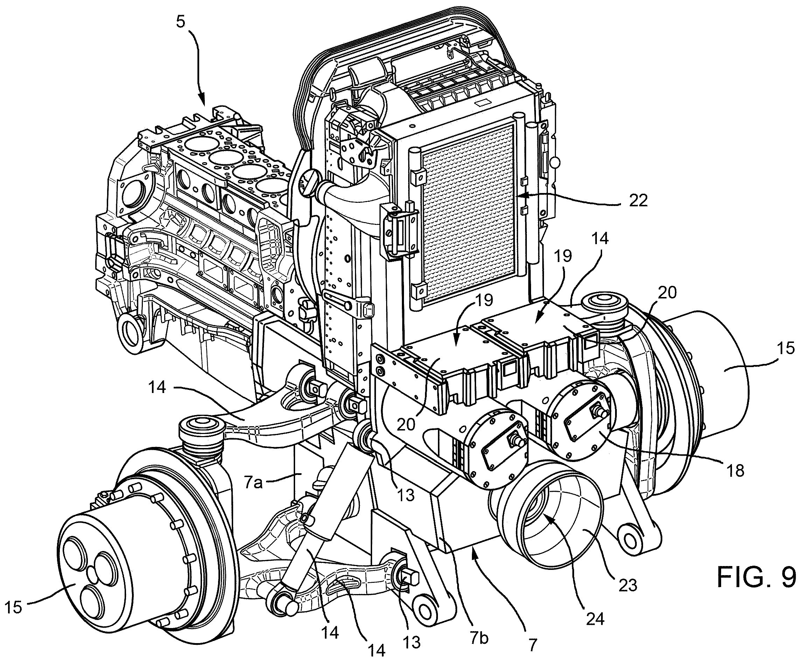

- Figure 9 is a perspective view of a hybrid axle according to a further embodiment of the present invention.

### DETAILED DESCRIPTION OF THE INVENTION

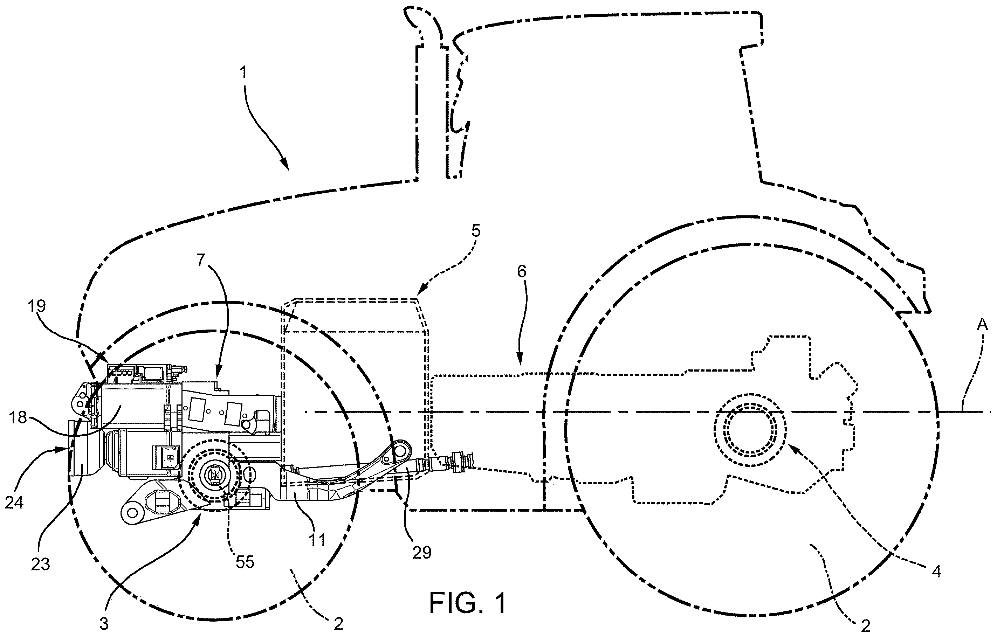

Figure 1 discloses a work vehicle 1 such as a tractor provided with a front axle 3 and a rear axle 4 that are movable with respect to the ground thanks, e.g. to wheels 2.

The vehicle 1 is provided with an internal combustion engine 5 and a rear transmission module 6 that is operatively interposed between the internal combustion engine 5 and the rear axle 4.

According to the invention, the front axle 3 is a hybrid driving axle, as described in the following, that is operatively connected to a plurality of electric machines 18, to the internal combustion engine 5 and to rear transmission module 6.

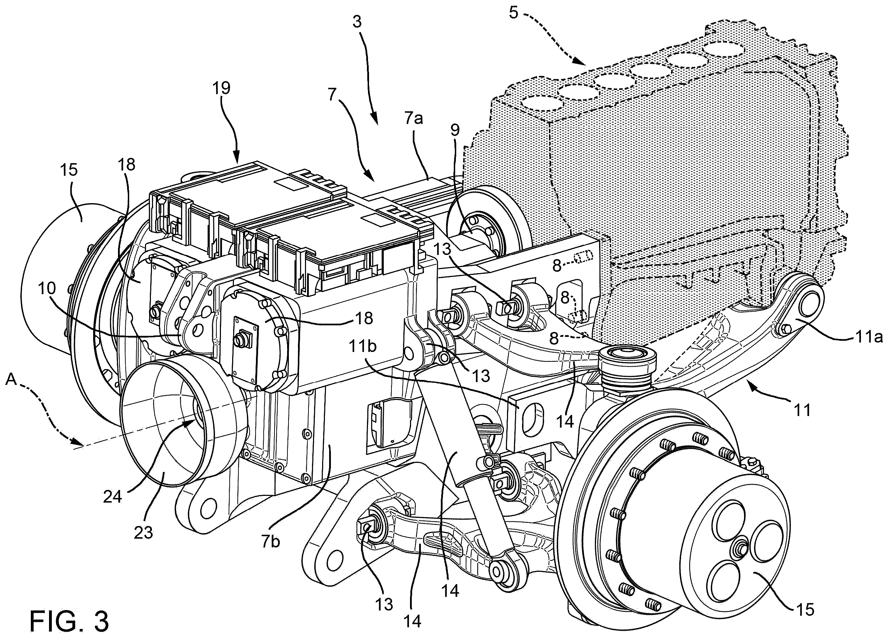

Making reference to figures 3, 4 and 5 the hybrid axle 3 comprises a housing 7 that is configured to be fixed to the housing of internal combustion engine 5. In particular, the housing 7 defines a plurality of openings 8 configured to house fixing means, not shown, such as threaded elements to fix the housing to the internal combustion engine 5.

In particular, such openings 8 are realized about axes that are parallel to a longitudinal axis A of the internal combustion engine 5, i.e. an axis that is parallel to an output shaft 9 of the internal combustion engine 5. More preferably, the housing 7 extends transversally to axis A similarly to the internal combustion engine 5, thereby defining together the same transversal encumbrance.

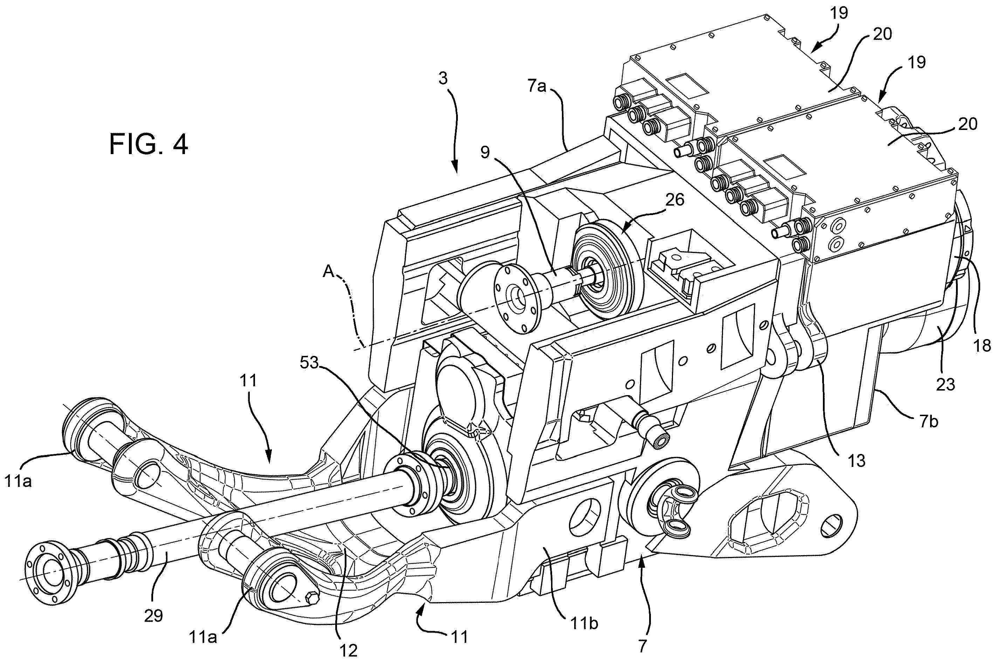

Advantageously, the housing 7 is furthermore connected to internal combustion engine 5 via a pair of lateral arms 11, namely a right and a left arm with respect to axis A. As better shown in figure 4, each arm 11 defines an inner portion 11a coupled to internal combustion engine 5 and an outer portion 11b coupled to the housing 7.

In greater detail, the inner portion 11a defines at least one opening that allows the fixation of the inner portion 11a to the housing 7.

Preferably, lateral arms 11 are connected together via a transversal member 12 that is substantially at the same height of the bottom of the housing 7. More preferably, the inner and outer portions 11a, 11b are positioned at a different height, i.e. the outer portion 11b is positioned near the bottom of the housing 7, i.e. near the transversal member 12, while the inner portion 11a is positioned on the internal combustion engine at a greater height. Accordingly, they are inclined and, preferably, in the described embodiment, curved with the convex portion faced to ground.

Moreover, the housing 7 may be realized in two portions, namely an inner portion 7a that is faced to the internal combustion engine 5 and an outer portion 7b connected to the inner portion 7a on the opposite side with respect to internal combustion engine 5.

Housing 7 defines support points 13 for allowing the connection of suspension elements 14 configured to support a wheel hub 15 of the axle 3.. In the disclosed embodiment both portions 7a, 7b defines support points 13 and the wheel hub 15 is carried in suspended way but it is clear that may be directly connected, e.g. via a fixed connection element, to at least one of portions 7a, 7b of housing 7.

Housing 7 may furthermore define a further support point 10. In the disclosed embodiments, such support point 10 is carried by housing 7a substantially along axis A. Support point 10 is configured to allow the connection of a front lifting system actuator, not shown, and may be realized via a pair of parallel flanges integrated in housing 7a.

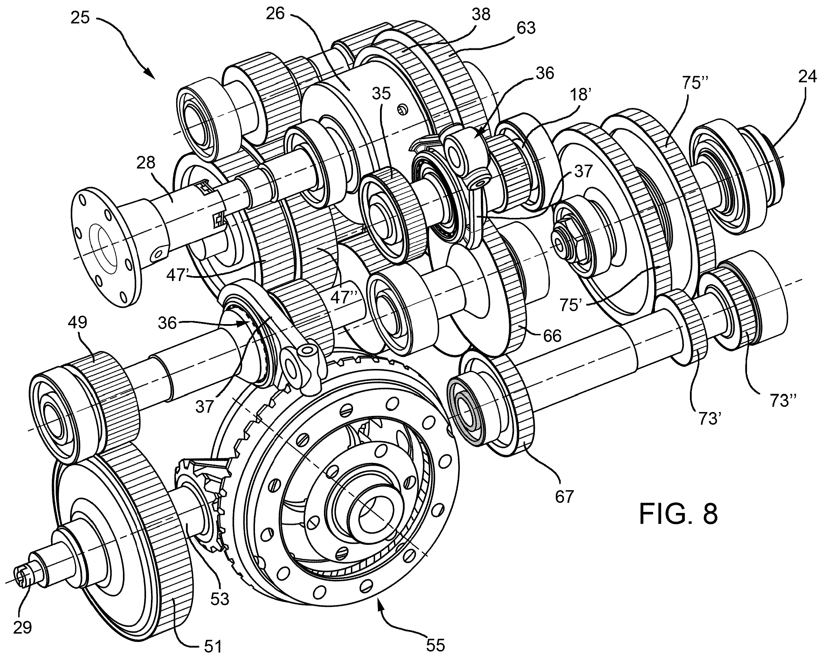

According to the embodiment shown in figure 3, 4 and 5 the housing 7 defines an inner space 17 configured to house at least a pair of electric machines 18. According the alternative embodiment of figure 8, the housing 7 is not shaped so that the inner space 17 may contain the electric machines 18, i.e. electric machines 18 are coupled to the housing 7 but not integrated therein.

The electric machines 18 are electrically connected one with respect to the other. In particular, the axle 3 further comprises electronic control means 19, such as inverters 20, configured to electrically connect and control the operation of the electric machines 18. In the embodiment of figure 3,4 and 5 such electronic control means 19 are integrated to the housing 7, while in the embodiment of figure 8 they are realized as separate elements fixed to the housing 7.

It may be appreciated that in both embodiments the electric machines 18 and electronic control means 19 are placed on the opposite of the internal combustion engine 5, i.e. integrated or fixed to the outer portion 7b of housing 7.

Clearly, the electric machines 18 and electronic control means 19 are electrically connected together. Such electric connection maybe realized via usual electric cables or, more advantageous, by means of specific power bars.. In the embodiment of figures 3 to 5, wherein the electric machines 18 and electronic control means 19 are integrated into housing 7, such cables/power bars are all housed in inner space 17, and fixed to the latter according the specific design requested by the technology"..

Furthermore, is noticed that inner portion 7a of housing 7 has vertically a lower extension with respect to outer portion 7b thereby allowing the fixation of cooling means 22 for cooling the internal combustion engine 5 (shown only in the embodiment of figure 8 for sake of clarity).

The front axle 3 may further comprises protection cover 23 placed on outer portion 7b for protecting a Front Power Take-Off, FPTO, 24.

As said, the front axle 3 is operatively connected to internal combustion engine 5, rear transmission 6 and electric machines 8. Such connection is achieved via transmission group 25 that is housed in inner space 17. If present, also FPTO 24 is operatively connected to such transmission group 25.

In particular, the transmission group 25 is operatively connected to internal combustion engine 5 via coupling means 26 such as a clutch 27 that is operatively interposed between the output shaft 9 of internal combustion engine 5 and a first shaft 28 of the transmission group 25. The transmission group 25 is operatively connected to rear transmission arrangement 6 via a shaft, e.g. a jackshaft 29, that is configured to be coupled to a second shaft 31 of the transmission group 25 and to transfer the torque provided by output shaft 31 to an output shaft 32 of the rear transmission arrangement 6.

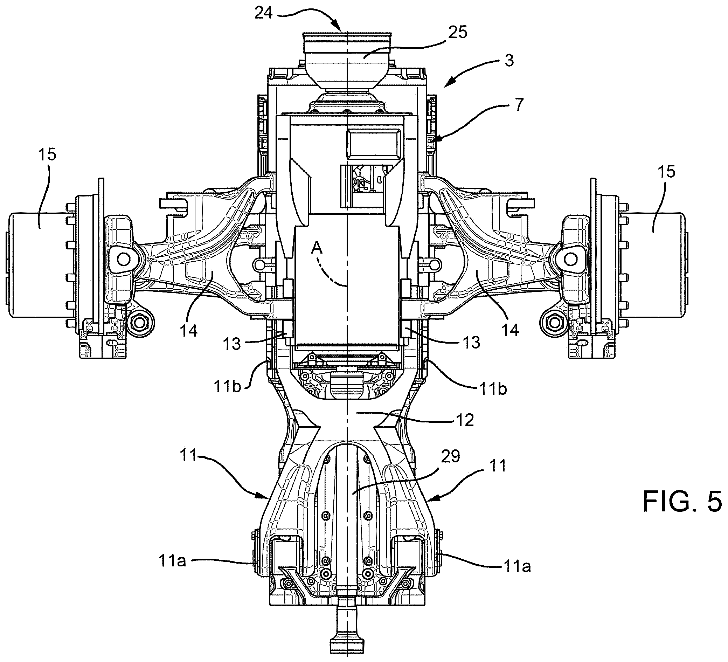

In greater detail, as appreciated in figure 4 and 5, the jackshaft 29 is arranged between lateral arms 11 and above transversal member 12 and extends, parallel to axis A, over underneath the internal combustion engine 5 to transmission 6.

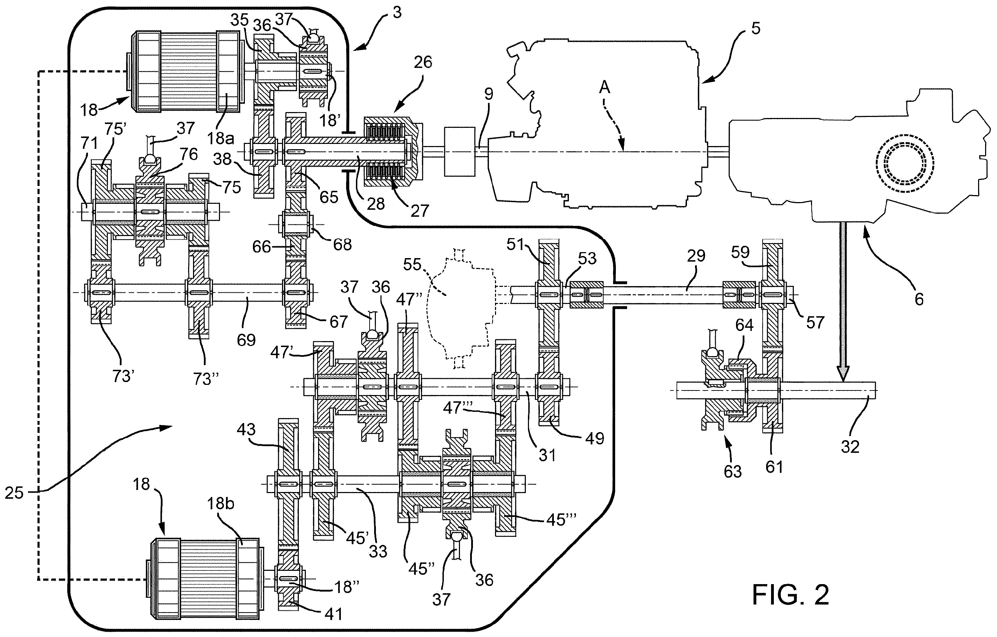

Making reference to figure 2, the transmission group 25 in detail comprises a first electric machine 18a selectively coupled to internal combustion engine 5 via coupling means 26 and a second electric machine 18b coupled via a third shaft 33 to output shaft 31.

In detail, the first electric machine 18a may be provided with an output shaft 18' that carries, in a rotatably free manner, a first output gear wheel 35 that may be engaged in rotation to output shaft 18' thanks to a selector 36, such as a dog clutch that can be actuated thanks to an actuator 37 such as an electro-mechanic actuator.

The first output gear wheel 38 is configured to cooperate with a first intermediate gear wheel 39 that is carried, engaged at rotation, with the first shaft 28 of the transmission group 25.

The second electric machine 18b may be provided with an output shaft 18'' that carries, engaged at rotation, a second output gear wheel 41, engaged in rotation to output shaft 18" and configured to mesh with a second intermediate gear wheel 43 that is carried by the third shaft 33.

The third shaft 33 carries at least a wheel 45 configured to mesh with a corresponding gear 47 carried by second shaft 31. In the disclosed embodiment, the second shaft 31 carries three gear wheels 47', 47'', 47‴ configured to alternatively mesh with respective gear wheels 45', 45'', 45‴ carried by the third shaft 33. In particular, the previously mentioned gears have different diameters thereby engaging defining three different gear ratios between the second and third shafts 31, 33. The choice between a specific gear ratio may be achieved via a selector 36 controlled by an actuator 37 as previously described.

Exempli gratia, a first gear wheel 45' of the third shaft 33 may be carried engaged in rotation therewith and the second and third gear wheels 47", 47'' of the second shaft 31 may be carried engaged in rotation therewith. The corresponding gears, i.e. the first wheel 47' carried by the second shaft 31 and the second and third gear wheels 45", 45‴ carried by the third shaft 33 may be carried in a rotationally free manner. As represented for sake of example, a selector 36 may be placed near gear 47' and a further selector 36 may be placed between gears 45", 45‴.

The second shaft 31 carries a further gear 49 rotationally engaged therewith and configured to mesh with a gear 51 that is rotatably engaged with a fourth shaft 53.

The fourth shaft 53 engages with a front differential assembly 55 configured to split the torque between the wheel hubs 15, as per se known and with the jackshaft 29.

The jackshaft 29 is connected to a fifth shaft 57 that carries, engaged at rotation, a gear wheel 59 that is configured to mesh with a gear wheel 61 carried, in a rotationally free manner by rear transmission shaft 32. The gear wheel 61 can be engaged at rotation with rear transmission shaft 32 thanks to coupling means 63 such as a dog clutch 64.

As said, the front axle 3 may be provided with a FPTO 24. In such case, the first shaft 28 carries, engaged at rotation therewith, a further gear 65 configured to mesh with a corresponding gear 67 carried by a sixth shaft 69. Preferably, the gears 65 and 67 may mesh thanks to the presence of an intermediate gear 66 carried in rotation by an intermediate shaft 68.

The sixth shaft 69 is operatively coupled to a FPTO shaft 71. Preferably, the sixth shaft 69 carries at least a wheel 73 configured to mesh with a corresponding gear 75 carried by FPTO shaft 71. In the disclosed embodiment, the sixth shaft 69 carries two gear wheels 73', 73" configured to alternatively mesh with respective gear wheels 75', 75" carried by the FPTO shaft 71.

In particular, the previously mentioned gears have different diameters thereby engaging defining two different gear ratios between the sixth and FPTO shafts 69, 71. The choice between a specific gear ratio may be achieved via a selector 36 controlled by an actuator 37 as previously described. In particular, selector 36 is interposed between gears 75', 75'' that are rotatably free carried on FPTO shaft 71 while gears 73', 73'' are rotatably engaged with sixth shaft 69.

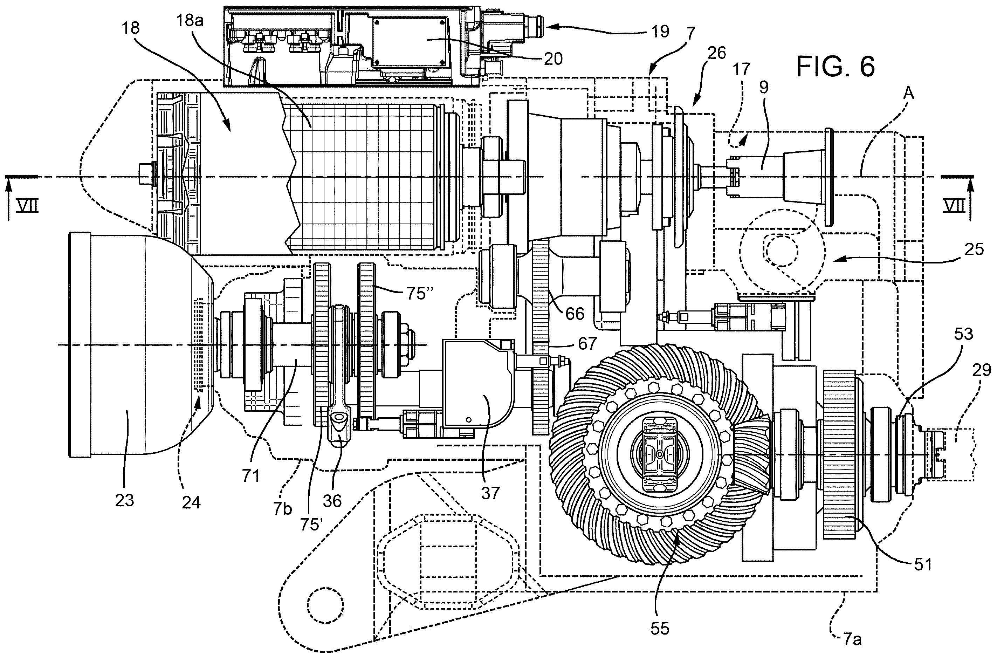

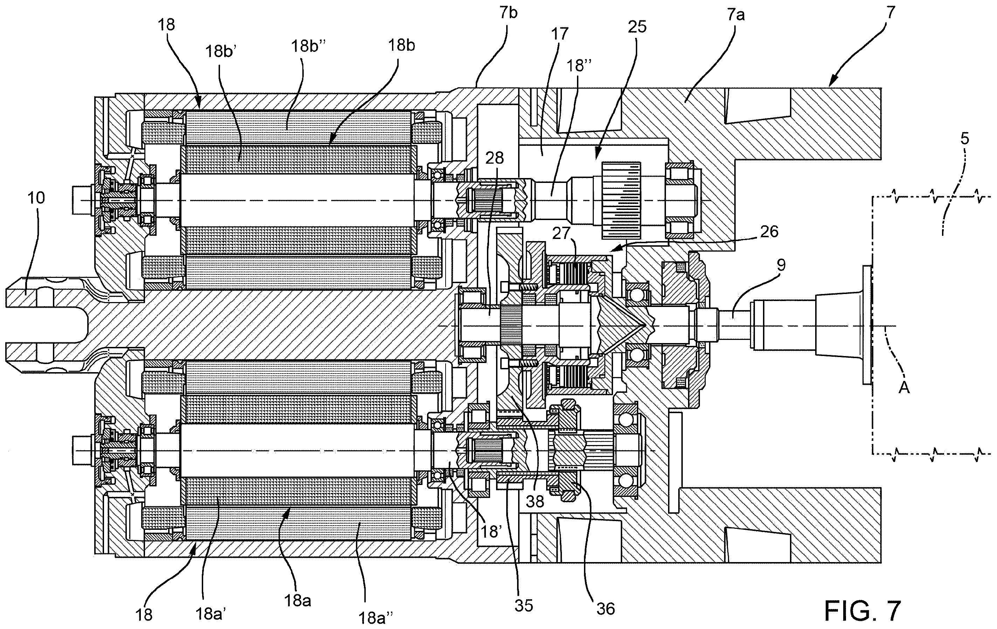

As can be seen in figures 6 and 7 the electric machines 18a, 18b are placed over the transmission group 25 between the FPTO 24 and the differential assembly 55 and, furthermore, they are placed symmetrically with respect to axis A and at the same height.

In particular, it is noticed that electric machines 18a, 18b comprises respective rotors 18a', 18b' that are coupled to the respective output shaft 18', 18'' and respective stators 18a", 18b'' that are rigidly carried internally with respect to outer portion 7b of housing 7.

In particular, they are housed in a specific non structural inner housing (not shown) positioned in space 17 and carried to housing 7 in order to decrease the transmission of axle loads to electric machines 18. This housing is furthermore configured to house the aforementioned cables and a cooling system (not shown) for the electric machines, according the needs of the electric machines.

All the shafts that are included in the transmission group 25 are parallel one with respect to the other and with respect to axis A. Consequently, the axis of the electric machines 18 are parallel to the axis of the shafts of the transmission group 25.

Clearly, the transmission group 25 further comprises other mechanical elements such as bearings, shoulders, O-rings and other known mechanical elements used for mounting the above mentioned structure of gears and shafts comprises by the transmission group 25.

The operation of the hybrid driving axle 3 according to the invention described above is the following.

Generally, the internal combustion engine 5 carries in rotation the shaft 9 and, on the opposite side and as known, the transmission 6 that provides torque to the rear transmission shaft 32 according to the ratio necessity of the vehicle. For sake of example, transmission 6 may be realized as described in WO 2020148452 A1.

On the opposite side when the coupling means 26 couple together shafts 28 and 9 and when the selector 36 couples shaft 18' to gear 35 the torque passes via gearings 38 and 35 to the first electric machine 18a. This latter may therefore work as generator, i.e. receiving mechanical energy and providing electrical energy.

In particular, such electrical energy may be used by the second electric machine 18b (or stored for further use) that provides torque to shaft 18". The torque passes via gearing between gears 41 and 43 to shaft 33. There, the user may select one gear ratio between the one defined by the coupling of gears 45' and 47' or 45'' and 47" or 45‴ and 47'''. The torque then passes through the selected gear ratio to shaft 31 and via meshing of gears 49 and 51 to shaft 53.

This latter is connected to front differential 55, that provides torque to the front axles of the axle 3 and to jackshaft 29.

If the users selects a four drive wheels modality, the coupling means 63 may allow the engagement of wheel 61 with rear transmission shaft 32 thereby allowing torque transmission from jackshaft 29 to rear transmission shaft. In such case the torque provided by the jackshaft 29 is summed to the torque provided by the transmission 6. In case the transmission 6 is not engaged, the vehicle 1 will be provided with a totally electric four-drive traction thanks to the above configuration.

If the FPTO 24 is present, it is possible to foresee two different operational conditions.

In a first possible operative condition, it may be assumed, as described above, that the engine shaft 9 is coupled to shaft 28 and that the selector 36 couples shaft 18' to wheel 35. In such configuration the torque provided by shaft 9 is divided between the first electric machine 18a, as described above, and, via meshing of gears 65, 66 and 67 to shat 69. By selecting a proper gear ratio between the gear couplings 73' and 75' or 73'' and 75", it is possible to vary the torque provided to FPTO shaft 71. If the selector 36 does not couple shaft 18' to wheel 35, the entire torque provided by engine shaft 9 is directed towards the FPT shaft 71 because gear 35 rotates freely on shaft 18'.

In a second possible operative condition, it may be assumed that the shaft 9 is not coupled to shaft 28. Accordingly, only electric machine 18a, that in such case works as electric motor may provide torque via gears 35, that is engaged to shaft 18', and 38, the gearings defined by wheels 65, 66 and 67 and via one of the ratio defined by gear couplings 73' and 75' or 73'' and 75".

In such operative condition, the electrical energy to first electric machine 18a is provided by battery means or may be provided by second electric machine 18b that works as generator carried by torque arriving from rear transmission shaft 32 via jackshaft 29.

In view of the foregoing, the advantages of the transmission group, the front hybrid driving axle according to the invention and vehicle comprising this latter are apparent.

The provided front hybrid driving axle has a very compact and small dimension, thereby allowing the use in substitution of existing standard axles.

Moreover, as shown, the front hybrid driving axle may be used both in conventional arrangement with respect to front hub wheels or in an independent suspended way.

Furthermore, electrical elements may be housed separately of integrated into the housing of the front hybrid driving axle thereby protecting this latter from the vehicle environment. Such latter solution is clearly more simple and safe.

In a very small space the front hybrid driving axle comprises the gearings to define the FPTO, the front differential and the transmission between the electrical motor and the rear transmission.

Such compact transmission group arrangement has very few elements with respect to existing one. Moreover, the compactness in a very small space allow a good lubrication with a small amount of lubricant.

In the use of electrical actuators, the actuation of the transmission elements is very rapid and has low power absorption.

It is clear, furthermore, that it is possible to have an independent traction on the front axle with respect to the rear axle or, alternatively, a four driving wheel traction or, further, a standard rear traction, according to the need of the agricultural vehicle.

As demonstrated, according to the capacity of the battery provided in the vehicle, it is possible to move the agricultural vehicle 1 in a full electric configuration.

The configuration with electric motors carried by housing but separated thereof allows to reduce the load stresses that may be provided to these latter.

It is clear that modifications can be made to the described transmission group, front hybrid driving axle according to the invention and vehicle comprising this latter which do not extend beyond the scope of protection defined by the claims.

For example, it is clear, as said, that the wheel hubs 15 may be fixedly carried to the housing 7 instead of the suspended configuration disclosed in the present application.

Furthermore, the disclosed geometries and dimension are variable according to the typology of agricultural vehicle.

Moreover the disclosed gears and gearings may vary according to the necessity of the work vehicle, in particular gear wheels may be of any typology and vary in number. Similarly shaft may be disposed in a different way and vary in their number.

Clearly, it is possible to foresee more than two electric machines and their relative position may vary with respect to the transmission group elements. Moreover, as shown, the electric machines may be integrated, or separated, with respect to housing of the hybrid driving axle.

Moreover, the actuators shown in the present disclosure may be of any typology other than electro-mechanical, e.g. hydraulic or pneumatic.

## Claims

1. Front hybrid driving axle (3) for an agricultural vehicle (1), said axle (3) comprising a housing (7) configured to define an inner space (17) configured to house transmission group (25), said axle (3) further comprising at least a pair of electric machines (18) and a differential assembly (55),
said transmission group (25) being operatively interposed between said at least a pair of electric machines (18),said differential assembly (55) and an internal combustion engine (5) of said vehicle (1),
wherein said transmission group (25) comprises a first shaft (28) configured to be selectively connected to an output shaft (9) of said internal combustion engine (5), said first shaft (28) being further selectively connectable to one (18a) of said pair of electric machines (18),
wherein said transmission group (25) comprises a second shaft (53) that is operatively connected to the other (18b) of said electric machines (18) and said differential assembly (55) ;
wherein said first shaft (28) is selectively connectable with a third shaft (71) that is coupled to a front power take off (24) of said vehicle.

2. Front hybrid driving axle (3)according to claim 1, comprising gearing defined by a first wheel (35) carried by an output shaft (18') of a first electric machine (18a) of said at least a pair of electric machines (18) and a second wheel (38) carried by said first shaft (28), one between the first wheel (35) and the second wheel (38) being carried in a rotatably free manner on the respective shaft and the other being fixedly carried on the respective shaft, the transmission group (25) further comprising selection means (36) configured to selectively couple said one between the first wheel (35) and the second wheel (38) to the respective shaft.

3. Front hybrid driving axle (3)according to claim 1 or 2, wherein said second shaft (53) is operatively connected to an output shaft (18") of a second electric machine (18b) of said at least a pair of electric machines (18) via a plurality of alternatively selectable gear ratios.

4. Front hybrid driving axle (3) according to claim 3, wherein said second shaft (53) carries a gear wheel (51) that is configured to mesh with a gear wheel (49) carried by a fourth shaft (31) and wherein said output shaft (18") of said second electric machine (18b) carries a gear wheel (41) configured to mesh with a gear wheel (43) carried by a fifth shaft (33), said fourth and fifth shafts (31, 33) being configured to be connected via a plurality of alternatively selectable gear ratios.

5. Front hybrid driving axle (3) according to claim 4, comprising at least a first wheel (45', 45", 45‴) carried by said fifth shaft (33) and at least a second wheel (47', 47", 47‴) carried by said fourth shaft (31), one between the first wheel (45', 45", 45‴) and the second wheel (47', 47", 47‴) being carried in a rotatably free manner on the respective shaft and the other being fixedly carried on the respective shaft, the transmission group (25) further comprising selection means (36) configured to selectively couple said first wheel (45', 45", 45") and the second wheel (47', 47", 47‴) to the respective shaft.

6. Front hybrid driving axle (3)according to any of the preceding claims, wherein said second shaft (53) is operatively connected to a rear transmission (6) of said vehicle.

7. Front hybrid driving axle (3)according to any one of the foregoing claims, wherein first shaft (28) is operatively connected to said third shaft (71) via a plurality of alternatively selectable gear ratios.

8. Front hybrid driving axle (3)according to any one of the foregoing claims, wherein said first shaft (28) carries a gear wheel (65) that is configured to cooperate with a wheel (67) carried by a seventh shaft (69), said third and seventh shafts (71, 69) being configured to be connected via a plurality of alternatively selectable gear ratios.

9. Front hybrid driving axle (3)according to claim 8, comprising at least a first wheel (73', 73") carried by said seventh shaft (69) and at least a second wheel (75', 75") carried by said third shaft (71), one between the first wheel (73', 73") and the second wheel (75', 75'') being carried in a rotatably free manner on the respective shaft and the other being fixedly carried on the respective shaft, the transmission group (25) further comprising selection means (36) configured to selectively couple said first wheel (73', 73") and the second wheel (75', 75") to the respective shaft.

10. Front hybrid driving axle (3)according to any of claims 2 to 9, wherein said selection means (36) are electro-actuated coupling means.

11. Front hybrid driving axle (3) according to any of the preceding claims, wherein all mentioned shafts are parallel to the output shaft (9) of said internal combustion engine (5).

12. Agricultural vehicle (1) comprising an internal combustion engine (5), a rear transmission (6) carried by such internal combustion engine (5) and a front hybrid driving axle (3) according to any of the previous claim.

13. Agricultural vehicle (1) according to claim 12 comprising coupling means (63) configured to selectively operatively couple said hybrid front driving axle (3) to said rear transmission (6).

## Patentansprüche

1. Hybridantriebsvorderachse (3) für ein landwirtschaftliches Fahrzeug (1), wobei die Achse (3) ein Gehäuse (7) aufweist, das dazu eingerichtet ist, einen Innenraum (17) zu definieren, der dazu eingerichtet ist, eine Getriebegruppe (25) aufzunehmen, wobei die Achse (3) des Weiteren zumindest ein Paar von elektrischen Maschinen (18) und eine Differenzialanordnung (55) umfasst,
wobei die Getriebegruppe (25) wirkend zwischen dem zumindest einen Paar von elektrischen Maschinen (18), der Differenzialanordnung (55) und einem Verbrennungsmotor (5) des Fahrzeugs (1) eingefügt ist,
wobei die Getriebegruppe (25) eine erste Welle (28) umfasst, die dazu eingerichtet ist, wahlweise mit einer Ausgangswelle (9) des Verbrennungsmotors (5) verbunden zu sein, wobei die erste Welle (28) des Weiteren wahlweise mit einer (18a) des Paars von elektrischen Maschinen (18) verbindbar ist,
wobei die Getriebegruppe (25) eine zweite Welle (53) umfasst, die wirkend mit der anderen (18b) des Paars von elektrischen Maschinen (18) und der Differenzialanordnung (55) verbunden ist,
wobei die erste Welle (28) wahlweise mit einer dritten Welle (71) verbindbar ist, die mit einer vorderen Zapfwelle (24) des Fahrzeugs verbunden ist.

2. Hybridantriebsvorderachse (3) nach Anspruch 1, die ein Übersetzungsverhältnis aufweist, das durch ein erstes Rad (35), das von einer Ausgangswelle (18') einer ersten elektrischen Maschine (18a) des zumindest einen Paars von elektrischen Maschinen (18) getragen wird, und ein zweites Rad (38) definiert ist, das von der ersten Welle (28) getragen wird, wobei eines aus dem ersten Rad (35) und dem zweiten Rad (38) frei drehbar auf der entsprechenden Welle getragen wird und das andere fest von der entsprechenden Welle getragen wird, wobei die Getriebegruppe (25) des Weiteren Selektionsmittel (36) umfasst, die dazu eingerichtet sind, wahlweise eines aus dem ersten Rad (35) und dem zweiten Rad (38) mit der entsprechenden Welle zu verbinden.

3. Hybridantriebsvorderachse (3) nach Anspruch 1 oder 2, wobei die zweite Welle (53) wirkend mit einer Ausgangswelle (18") einer zweiten elektrischen Maschine (18b) des zumindest einen Paars von elektrischen Maschinen (18) über eine Mehrzahl von alternativ wählbaren Übersetzungsverhältnissen verbunden ist.

4. Hybridantriebsvorderachse (3) nach Anspruch 3, wobei die zweite Welle (53) ein Zahnrad (51) trägt, das dazu eingerichtet ist, mit einem Zahnrad (49), das von einer vierten Welle (31) getragen wird, einzugreifen, und wobei die Ausgangswelle (18") der zweiten elektrischen Maschine (18b) ein Zahnrad (41) trägt, das dazu eingerichtet ist, mit einem Zahnrad (43), das von einer fünften Welle (33) getragen wird, einzugreifen, wobei die vierte und die fünfte Welle (31, 33) dazu eingerichtet sind, über eine Mehrzahl von alternativ wählbaren Übersetzungsverhältnissen verbunden zu sein.

5. Hybridantriebsvorderachse (3) nach Anspruch 4, die zumindest ein erstes Rad (45', 45", 45‴), das von der fünften Welle (33) getragen wird, und die zumindest ein zweites Rad (47', 47", 47‴) umfasst, das von der vierten Welle (31) getragen wird, wobei eines aus dem ersten Rad (45', 45", 45‴) und dem zweiten Rad (47', 47", 47‴) frei drehbar von der entsprechenden Welle getragen wird und das andere fest von der entsprechenden Welle getragen wird, wobei die Getriebegruppe (25) des Weiteren Selektionsmittel (36) umfasst, die dazu eingerichtet sind, wahlweise das erste Rad (45', 45", 45‴) und das zweite Rad (47', 47", 47‴) mit der entsprechenden Welle zu verbinden.

6. Hybridantriebsvorderachse (3) nach einem der vorhergehenden Ansprüche, wobei die zweite Welle (53) wirkend mit einem hinteren Getriebe (6) des Fahrzeugs verbunden ist.

7. Hybridantriebsvorderachse (3) nach einem der vorhergehenden Ansprüche, wobei die erste Welle (28) wirkend mit der dritten Welle (71) über eine Mehrzahl von alternativ wählbaren Übersetzungsverhältnissen verbunden ist.

8. Hybridantriebsvorderachse (3) nach einem der vorhergehenden Ansprüche, wobei die erste Welle (28) ein Zahnrad (65) trägt, das dazu eingerichtet ist, mit einem Rad (67), das von einer siebten Welle (69) getragen wird, zusammenzuwirken, wobei die dritte und die siebte Welle (71, 69) dazu eingerichtet sind, über eine Mehrzahl von alternativ wählbaren Übersetzungsverhältnissen verbunden zu sein.

9. Hybridantriebsvorderachse (3) nach Anspruch 8, die zumindest ein erstes Rad (73', 73"), das von der siebten Welle (69) getragen wird, und zumindest ein zweites Rad (75', 75") aufweist, das von der dritten Welle (71) getragen wird, wobei eines aus dem ersten Rad (73', 73") und dem zweiten Rad (75', 75") frei drehbar von der entsprechenden Welle getragen wird und das andere fest von der entsprechenden Welle getragen wird, wobei die Getriebegruppe (25) des Weiteren Selektionsmittel (36) aufweist, die dazu eingerichtet sind, wahlweise das erste Rad (73', 73") und das zweite Rad (75', 75") mit der entsprechenden Welle zu verbinden.

10. Hybridantriebsvorderachse (3) nach einem der Ansprüche 2 bis 9, wobei die Selektionsmittel (36) elektrisch betätigbare Kupplungsmittel sind.

11. Hybridantriebsvorderachse (3) nach einem der vorhergehenden Ansprüche, wobei alle erwähnten Wellen parallel zu der Ausgangswelle (9) des Verbrennungsmotors (5) sind.

12. Landwirtschaftliches Fahrzeug (1) mit einem Verbrennungsmotor (5), einem hinteren Getriebe (6), das von dem Verbrennungsmotor (5) getragen wird, und einer Hybridantriebsvorderachse (3) nach einem der vorhergehenden Ansprüche.

13. Landwirtschaftliches Fahrzeug (1) nach Anspruch 12, das Kupplungsmittel (63) aufweist, die dazu eingerichtet sind, die Hybridantriebsvorderachse (3) mit dem hinteren Getriebe (6) wahlweise wirkend zu verbinden.

## Revendications

1. Essieu moteur hybride avant (3) pour un véhicule agricole (1), ledit essieu (3) comprenant un boîtier (7) configuré pour définir un espace intérieur (17) configuré pour loger un groupe de transmission (25) ledit essieu (3) comprenant en outre au moins une paire de machines électriques (18) et un ensemble différentiel (55),
ledit groupe de transmission (25) étant interposé fonctionnellement entre ladite au moins une paire de machines électriques (18), ledit ensemble différentiel (55) et un moteur à combustion interne (5) dudit véhicule (1),
dans lequel ledit groupe de transmission (25) comprend un premier arbre (28) configuré pour être sélectivement raccordé à un arbre de sortie (9) dudit moteur à combustion interne (5), ledit premier arbre (28) pouvant en outre être raccordé de manière sélective à l'une (18a) parmi ladite paire de machines électriques (18),
dans lequel ledit groupe de transmission (25) comprend un deuxième arbre (53) qui est raccordé fonctionnellement à l'autre (18b) parmi lesdites machines électriques (18) et audit ensemble différentiel (55) ;
dans lequel ledit premier arbre (28) peut être raccordé de manière sélective à un troisième arbre (71) qui est couplé à une prise de force avant (24) dudit véhicule.

2. Essieu moteur hybride avant (3) selon la revendication 1, comprenant un engrenage défini par une première roue (35) soutenue par un arbre de sortie (18') d'une première machine électrique (18a) de ladite au moins une paire de machines électriques (18) et une seconde roue (38) soutenue par ledit premier arbre (28), l'une entre la première roue (35) et la seconde roue (38) étant soutenue de manière libre en rotation sur l'arbre respectif et l'autre étant soutenue de manière fixe sur l'arbre respectif, le groupe de transmission (25) comprenant en outre des moyens de sélection (36) configurés pour coupler de manière sélective ladite roue entre la première roue (35) et la seconde roue (38) à l'arbre respectif.

3. Essieu moteur hybride avant (3) selon la revendication 1 ou la revendication 2, dans lequel ledit deuxième arbre (53) est raccordé fonctionnellement à un arbre de sortie (18") d'une seconde machine électrique (18b) de ladite au moins une paire de machines électriques (18) par l'intermédiaire d'une pluralité de rapports d'engrenage sélectionnables de manière alternative.

4. Essieu moteur hybride avant (3) selon la revendication 3, dans lequel ledit deuxième arbre (53) soutient une roue d'engrenage (51) configurée pour s'engrener avec une roue d'engrenage (49) soutenue par un quatrième arbre (31) et dans lequel ledit arbre de sortie (18") de ladite seconde machine électrique (18b) soutient une roue d'engrenage (41) configurée pour s'engrener avec une roue d'engrenage (43) soutenue par un cinquième arbre (33), lesdits quatrième et cinquième arbres (31, 33) étant configurés pour être raccordés par l'intermédiaire d'une pluralité de rapports d'engrenage pouvant être sélectionnés en alternance.

5. Essieu moteur hybride avant (3) selon la revendication 4, comprenant au moins une première roue (45', 45", 45‴) soutenue par ledit cinquième arbre (33) et au moins une seconde roue (47', 47", 47‴) soutenue par ledit quatrième arbre (31), l'une parmi la première roue (45', 45", 45‴) et la seconde roue (47', 47", 47‴) étant soutenue de manière libre en rotation sur l'arbre respectif et l'autre étant soutenue de manière fixe sur l'arbre respectif, le groupe de transmission (25) comprenant en outre des moyens de sélection (36) configurés pour coupler de manière sélective ladite première roue (45', 45", 45") et la seconde roue (47', 47", 47"') à l'arbre respectif.

6. Essieu avant hybride (3) selon l'une quelconque des revendications précédentes, dans lequel ledit deuxième arbre (53) est raccordé fonctionnellement à une transmission arrière (6) dudit véhicule.

7. Essieu avant hybride (3) selon l'une quelconque des revendications précédentes, dans lequel le premier arbre (28) est raccordé fonctionnellement au troisième arbre (71) par l'intermédiaire d'une pluralité de rapports d'engrenage pouvant être sélectionnés en alternance.

8. Essieu moteur hybride avant (3) selon l'une quelconque des revendications précédentes, dans lequel ledit premier arbre (28) soutient une roue d'engrenage (65) configurée pour coopérer avec une roue (67) soutenue par un septième arbre (69), lesdits troisième et septième arbres (71, 69) étant configurés pour être raccordés par l'intermédiaire d'une pluralité de rapports d'engrenage pouvant être sélectionnés en alternance.

9. Essieu moteur hybride avant (3) selon la revendication 8, comprenant au moins une première roue (73', 73") soutenue par ledit septième arbre (69) et au moins une seconde roue (75', 75") soutenue par ledit troisième arbre (71), l'une parmi la première roue (73', 73") et la seconde roue (75', 75") étant soutenue de manière libre en rotation sur l'arbre respectif et l'autre étant soutenue de manière fixe sur l'arbre respectif, le groupe de transmission (25) comprenant en outre des moyens de sélection (36) configurés pour coupler de manière sélective ladite première roue (73', 73") et la seconde roue (75', 75") à l'arbre respectif.

10. Essieu moteur hybride avant (3) selon l'une quelconque des revendications 2 à 9, dans lequel les moyens de sélection (36) sont des moyens de couplage à actionnement électrique.

11. Essieu moteur hybride avant (3) selon l'une quelconque des revendications précédentes, dans lequel tous les arbres mentionnés sont parallèles à l'arbre de sortie (9) dudit moteur à combustion interne (5).

12. Véhicule agricole (1) comprenant un moteur à combustion interne (5), une transmission arrière (6) soutenue par ce moteur à combustion interne (5) et un essieu moteur hybride avant (3) selon l'une quelconque des revendications précédentes.

13. Véhicule agricole (1) selon la revendication 12 comprenant des moyens de couplage (63) configurés pour coupler fonctionnellement et de manière sélective ledit essieu moteur hybride avant (3) à ladite transmission arrière (6).
